# EUROPEAN PATENT SPECIFICATION

(11) **EP 1 514 756 B1**
(45) Date of publication and mention of the grant of the patent: **14.11.2007**
(21) Application number: 04254913.9
(22) Date of filing: 16.08.2004
(51) Int. Cl.: B60T 11/16, B60T 13/14, B60T 11/232

(54) **Master cylinder**
Hauptzylinder
Maître-cylindre

(30) Priority: 12.09.2003 GB 0321389
(43) Date of publication of application: 16.03.2005
(73) Proprietor: Carlisle Brake Products (UK) Limited, Sherbourne Dorset DT9 4JW (GB)
(72) Inventor: Batchelor, Mark, Newport Gwent, NP20 3NJ (GB)
(74) Representative: Jones, John Bryn

(56) References cited:
- GB-A- 1 122 798
- GB-A- 1 238 861
- US-A- 3 543 508
- US-A- 3 797 244

## Description

The present invention relates to combined master cylinder and dump valves, and also to a method of manufacturing such valves. The invention also relates to a method of manufacturing a combined master cylinder and booster.

Certain vehicles, such as bulldozers, use a hydrostatic drive system. Typically an engine driven hydraulic pump will provide a flow of pressurised hydraulic fluid to a hydraulic motor. The hydraulic motor is coupled to wheels (or tracks) of the vehicle. Thus, by driving the hydraulic motor, it is possible to manoeuvre the vehicle. The vehicle will be provided with brakes, and in order not to overheat the brakes, pressurised flow to the hydraulic motor must substantially cease prior to the brakes being applied.

It is known to provide a "dump valve" between the engine driven pump and the hydraulic motor. Opening of the dump valve causes the pump/motor to vent to tank, thereby ceasing drive to the vehicle wheels. Once the valve is open, the brakes are then applied. In this way the brakes are only required to slow the vehicle and do not act against any driving force of the hydraulic pump/motor. The applicant has invented a new combined master cylinder and dump valve.

Furthermore, certain other vehicles, such as agricultural tractors, are known to use a combined brake master cylinder and booster. In particular, those vehicles that use hydrostatic drive systems do not use a combined brake master cylinder and booster. Similarly, those vehicles that use a combined brake master cylinder and booster do not have hydrostatic drive systems. The document US 3 797 244 describes a hydraulic braking system.

In combined brake master cylinder and boosters, brake pedal effort applied via a push rod is increased (or boosted) and this boosted force is applied to a master cylinder. Thus, such a device assists the operator of the vehicle when braking. Typically such a system is utilised with a mechanically driven vehicle. Thus, in order to apply the brake, the operator will typically have taken his right foot off the accelerator and applied it to the brake pedal, or alternatively will simultaneously depress the clutch pedal with his left foot and the brake pedal with his right foot. In either event it is apparent that the drive to the vehicle wheels ceases via a mechanism other than the combined master cylinder and booster valve. In other words, the combined master cylinder and booster valve plays no part in the ceasing of drive to the vehicle wheels.

The applicant is the first to appreciate that a significant number of components of known combined master cylinder and booster valves can be utilised to provide a combined master cylinder and dump valve. Thus, due to the economies of scale, this provides for the potential to reduce both the cost of the known combined master cylinder and booster valve, and also a reduction in the cost of a new combined master cylinder and dump valve.

Thus, according to the present invention there is provided a combined master cylinder and dump valve including a body having a body bore, a brake port, a tank port, and a pressure port with each port being hydraulically connected with the body bore, a piston slideable within the body bore and a plunger,
the piston delimiting a part of the body bore to define a master cylinder for pressurising the brake port, the piston further including a piston seal for isolating the pressure port from the tank port, and including a piston bore, a first piston hole set for hydraulically connecting the pressure port to the piston bore and a second piston hole set for hydraulically connecting the piston bore to the tank port, the plunger being slideably received in the piston bore and having a plunger bore, a plunger hole set for selectively connecting the first piston hole set with the plunger bore, a plunger seal arrangement for selectively isolating the first piston hole set from the plunger bore,
the plunger bore being hydraulically connected to the piston bore, such that:-
in a rest condition the master cylinder is unpressurised and the seal arrangement isolates the first piston hole set from the plunger bore, thereby isolating the pressure port from the tank port, and
in an actuated condition, the plunger acts to slideably move the piston to pressurise the brake port, and the plunger hole set hydraulically connects the first piston hole set with the plunger bore, thereby hydraulically connecting the pressure port to the tank port.

The invention will now be described, by way of example only, with reference to the accompanying drawings in which:-
Figure 1 is a schematic view of a hydraulic circuit incorporating the combined master cylinder and dump valve according to the present invention,
Figure 2 is a schematic cross-section view of a combined master cylinder and dump valve according to the present invention in a rest position,
Figure 3 is a manufacturing cross-section drawing of a known combined master cylinder and booster in a rest position, and
Figure 4 is an alternative schematic view to figure 1 showing the internal operation of the combined master cylinder and dump valve in more detail.

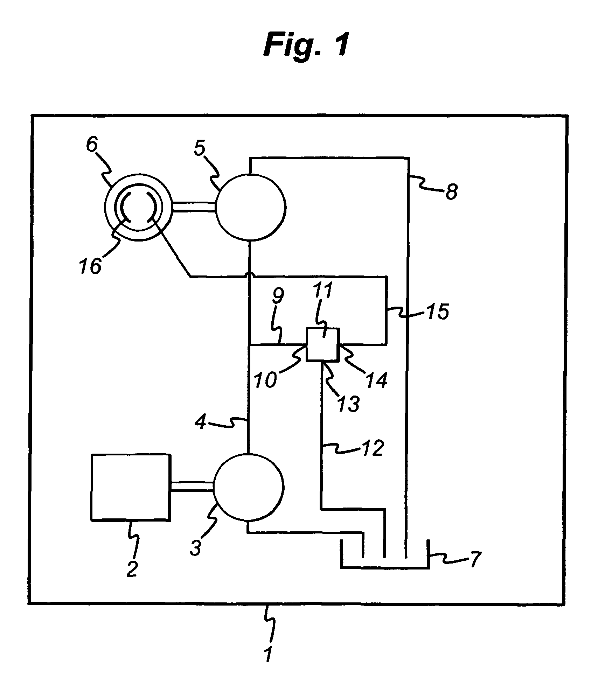

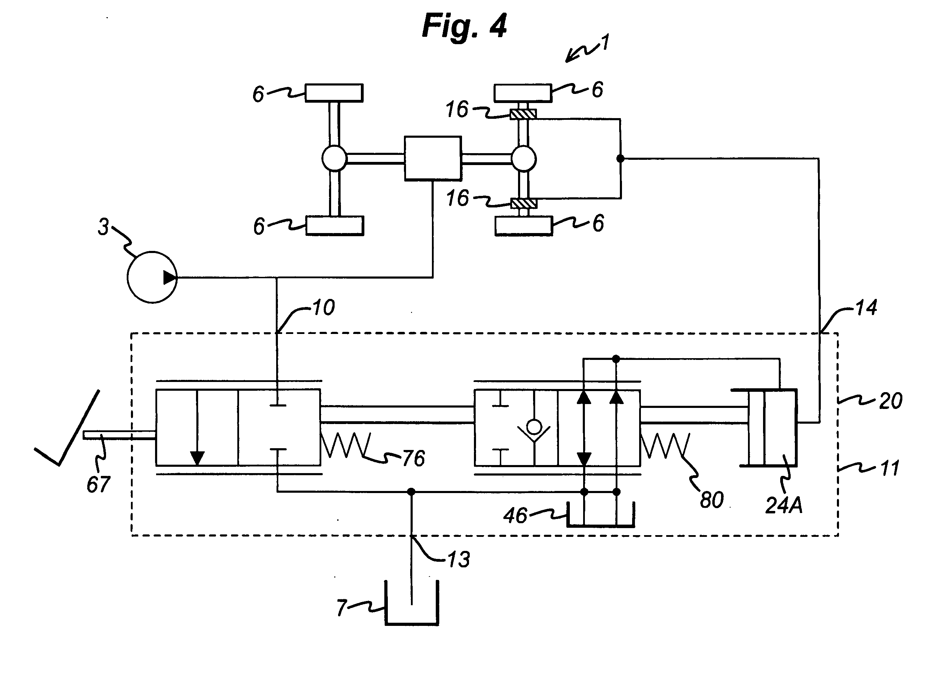

With reference to figures 1 and 4 there is shown a vehicle 1 having an engine 2 drivingly coupled to a hydraulic pump 3. A hydraulic line 4 couples the output from hydraulic pump 3 to the input of a hydraulic motor 5. The hydraulic motor 5 is drivingly coupled to wheels 6 of the vehicle. The output from the hydraulic motor 5 returns to the hydraulic tank 7 via hydraulic line 8, tee'd of hydraulic line 4 is hydraulic line 9 which is connected to the pressure port 10 of a combined master cylinder and dump valve 11 (herein known as a CMDV) according to the present invention. Hydraulic line 12 connects the tank port 13 of the CMDV to tank. Hydraulic line 15 connects the brake port 14 of the CMDV to brake 16. Operation of the vehicle is as follows:-

In order to drive the vehicle, engine 2 drives hydraulic pump 3 which takes hydraulic fluid from tank 7 and pressurises it. Pressurised fluid is then fed along hydraulic line 4 to hydraulic motor 5 which is caused to rotate, in turn, rotating wheel 6 and hence moving the vehicle. When the vehicle operator requires to brake the vehicle, he or she will apply their foot to the foot brake pedal whereupon the dump valve components of the CMDV will vent line 4 to tank via lines 9 and 12. The master cylinder components of the CMDV will then act to hydraulically pressurise line 15, thereby applying the brakes.

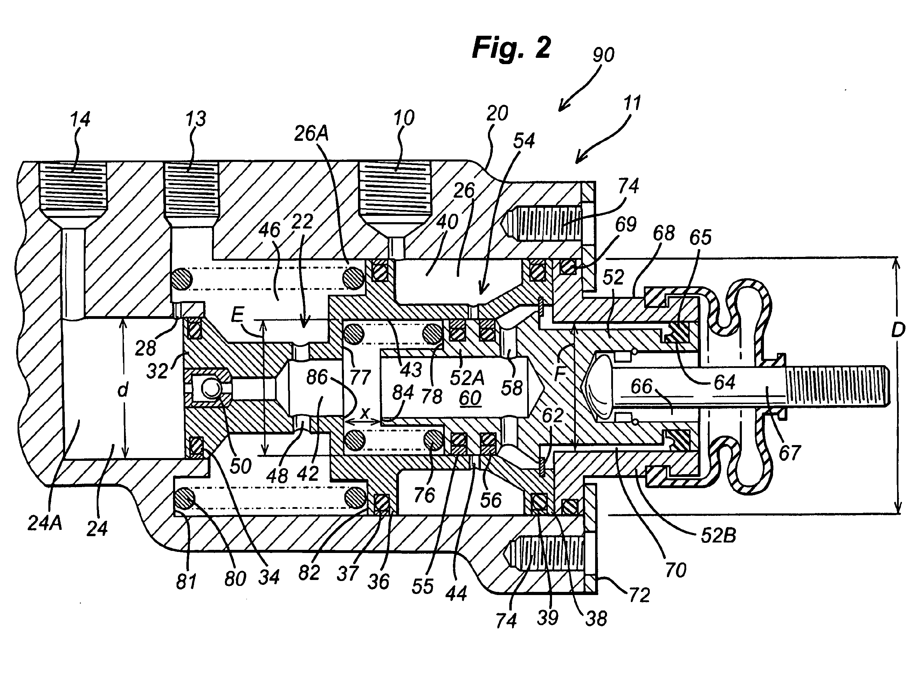

The CMDV can be seen in more detail in figure 2. The CMDV includes a body 20, typically formed as a casting and then subsequently machined. Body 20 includes a central body bore 22 having a first cylindrical portion 24 of diameter d and a second cylindrical portion 26 of diameter D. Pressure port 10 and tank port 13 are both hydraulically connected to the second cylindrical portion 26, and brake port 14 is hydraulically connected to the first cylindrical portion 24.

First cylindrical portion 24 defines a master cylinder 24A and the second cylindrical portion 26 defines a body main cylinder 26A.

A master cylinder recuperation hole 28 is capable of selectively hydraulically connecting master cylinder 24A with the body main cylinder 26A.

Slideably mounted within the body is a piston 30. A first end 32 of piston 30 is received within the first cylindrical portion 24 with the remainder of the piston being generally received within second cylindrical portion 26. First end 32 includes a master cylinder seal 34.

A first piston land 36 receives a first piston seal 37 for sealing the first piston land to the second cylindrical portion 26. A second piston land 38 receives a second piston seal 39 for sealing the second piston land to the second cylindrical portion 26. It can be seen that the first and second piston lands are spaced apart axially and define an annular region 40 of the body main cylinder 26A. The piston includes a piston bore 42 and a first piston hole set 44 includes a series of circumferentially spaced radially orientated holes (only two of which are shown) which hydraulically connect annular region 40 with piston bore 42.

The piston and in particular the first piston land 36, together with the body main cylinder 26A define an annular region 46, to the left of first piston land 36 when viewing figure 2.

A second piston hole set 48 includes a series of radially orientated holes (only two shown) which hydraulically connect the piston bore 42 with the annular region 46.

A check valve 50 is capable of selectively allowing hydraulic fluid to flow from piston bore 42 into the master cylinder 24A.

Piston bore 42 includes cylindrical portion 43 of diameter E. Slideably mounted within cylindrical portion 43 (of diameter E) is a first end 52A of a plunger 52. Mounted on first end 52A is a plunger seal arrangement 54 which includes a first plunger seal 55 and a second plunger seal 56 both in sealing relationship with the walls of cylindrical portion 43.

It is apparent that the first plunger seal 55 is axially spaced from the second plunger seal 56.

First end 52A further includes a plunger hole set 58 which hydraulically connects a region of the piston bore to the right (when viewing figure 2) of second plunger seal 56 with a plunger bore 60 of the plunger.

A circlip 62 is mounted in a groove of the piston and retains the plunger generally within the piston bore. A second end 52B of the plunger 52 includes a groove 64 to receive a third plunger seal 65.

A second end 52B further includes a recess 66 which receives a push rod 67.

A closing spiggot 68 is generally top hat in cross section and includes a land having a seal 69 to seal between the land and the second cylindrical portion 62. The closing spiggot includes a central bore 70 of diameter F for slideably receiving the second end 52B of the plunger 52, and in particular for sealingly engaging the third plunger seal 65. In use spiggot 68 does not move relative to the body 20. Seal 69 prevents the leakage of hydraulic fluid outside of the CMDV.

A closing plate 72 is secured to the body 20 via bolt (not shown) or studs and nuts (not shown) which engage threaded holes 74.

A first resilient means in the form of a first spring 76 acts between a first spring abutment 77 of the piston and a spring abutment 78 of the plunger to bias these abutments apart. A second resilient means in the form of a second spring 80 act between a spring abutment 81 of the body and a second spring abutment 82 (in this case the first piston land 36) of the piston 30 to bias the abutments 81 and 82 apart.

Plunger 52 includes a plunger abutment 84 and piston 30 includes a corresponding piston abutment 86. In the rest condition as shown in figure 2, abutments 84 and 86 are spaced apart by distance x. Operation of the CMDV is as follows.

In summary, operator pedal force is applied to push rod 67 which initially moves plunger 52 to the left, relative to piston 30 thereby progressively closing the gap between abutments 84 and 86, and hydraulically connecting pressure port 10 with tank port 13, thereby operating as a dump valve. When abutment 84 contacts abutment 86, piston 30 is caused to move to the left such that master cylinder seal 34 moves past recuperation hole 28, thereby sealing the master cylinder 24A and allowing brake port 14 to be pressurised, to apply the brakes.

Figure 4 shows a detailed schematic view of the combined master cylinder and dump valve 11 with body 20 being represented by the chain dotted line. The three ports (pressure port 10, tank port 13 and brake port 14) can be seen connecting the associated external hydraulic lines with the body 20. As will be further described below, it is important that no air enters the master cylinder 24A and thus the check valve 50 and master cylinder recuperation hole 28 must recuperate the master cylinder from a region of the body 20 that is full of hydraulic fluid. In this case recuperation hole 28 and check valve 50 both recuperate the master cylinder from the annular region 46 which effectively acts as an internal tank. This internal "tank" 46 has been represented on figure 4.

The operation in more detail is as follows:-

Pressure port 10 is permanently hydraulically connected to annular region 40, since first piston seal 37 always sits to the left of pressure port 10 when viewing figure 2, and third piston seal 39 always sits to the right of pressure port 10 even at the extreme of movement of the piston towards the left when viewing figure 2.

Annular region 40 is in permanent hydraulic connection with the first piston hole set 44.

Tank port 13, annular region 46, second piston hole set 48, piston bore 42, plunger bore 60 and plunger hole set 58 are all permanently hydraulically connected to each other.

The hydraulic connection between master cylinder 24A and annular region 46 is selectively blocked as master cylinder seal 34 passes to the left of recuperation hole 28.

As shown in figure 2, the plunger seal arrangement 54 ensures that the first piston hole set 44 is hydraulically isolated from the plunger hole set 58. However, as second plunger seal 56 moves to the left of the first piston hole set, the first piston hole set becomes hydraulically connected with the plunger hole set 58.

Check valve 50 selectively allows for recuperation of the master cylinder 24 in a known manner.

Figure 2 shows the CMDV in a rest position, with no force being applied to the push rod 67. Under the circumstances spring 80 acts to bias piston 30 into abutting engagement with closing spiggot 68, which acts as a stop. Similarly first spring 76 biases plunger 52 to the right when viewing the figure, into abutting engagement with circlip 62. It can be seen that in this position, recuperating holes 28 are open, and first piston hole set 44 has been closed by plunger seal arrangement 54. As such, pressure port 10 cannot vent to tank port 13 and hence hydraulic line 9 is closed. Thus, hydraulic pump 3 is capable of driving hydraulic motor 5.

As mentioned above, it is preferable that pressure port 10 is hydraulically connected to tank port 13 (i.e. the dump valve is opened) prior to the master cylinder 24A pressurising the brake port 14 (i.e. prior to the brakes being applied). In order to achieve this function, the first and second springs 76 and 80 and the distance x between abutments 84 and 86 must be correctly designed. By way of example, one installation may have an installed pre-load on second spring 80 of 200 newtons. First spring 76 may have an installed pre-load of 60 newtons and distance x may be 7mm. The spring rate of first spring 76 would be 140 newtons per 7mm.

From these figures, it will be appreciated that the installed pre-load of the first spring 76, when the CMDV is in the rest position, is less than the installed pre-load of the second spring 80. Thus, when a force is applied to the push rod, the first spring 76 will compress in preference to second spring 80. This in turn means that as push rod 67 moves to the left, the piston initially remains stationary and the plunger seal arrangement 54 moves to the left relative to the stationary first piston hole set. Further movement of the push rod 67 to the left causes the distance between abutments 84 and 86 to further close and second plunger seal 56 ultimately will move to the left of the first piston hole set, thereby hydraulically connecting the pressure port to the tank port and hence opening the dump valve.

As abutments 84 and 86 contact each other, first spring 76 will have been compressed by 7mm and will therefore be exherting a load of 200 newtons (i.e. an initial installed load of 60 newtons plus 7mm of compression at a rate of 140 newtons per 7mm compression). It will be appreciated therefore that as abutments 84 and 86 contact each other, the spring load exerted by first spring 76 is substantially equal to the spring load exherted by second spring 80. Further movement of the push rod to the left causes abutment 84 to press on abutment 86, thereby moving the piston to the left, closing the recuperation valve 28, and hence pressurising the master cylinder and brake port 14.

The release of the brake pedal causes the components to return the position shown in figure 2, thereby releasing the brake, and closing the dump valve, thus allowing the hydraulic pump 3 to drive the hydraulic motor 5 to move the vehicle.

As shown in figure 2 the first piston hole set comprises a plurality of holes spaced circumferentially around the piston. All holes are formed at the same longitudinal position of the piston.

In a further, preferred embodiment, the first piston hole set can comprise a series of circumferentially spaced holes, with each hole being at a different longitudinal position of the piston. Clearly, if the plunger seal arrangement of such an embodiment is in the form of a first plunger seal and a second plunger seal, then these plunger seals must be spaced apart sufficiently to encompass all holes of the first piston hole set to ensure that the first piston hole set is hydraulically isolated from the first plunger hole set and a central region of the piston bore. In a preferred embodiment, the holes of the first piston hole set are formed as part of a helix around the piston circumference.

By way of example, in one application, the first piston hole set may include 16 radially orientated holes each of 1.5mm diameter. When formed as a helix, adjacent holes can be longitudinally offset by 0.2mm. Thus the actual distance between the first hole and the sixteenth hole would be 3mm (i.e. 15 gaps X 0.2mm = 3mm). Furthermore, the total distance travelled by the plunger, relative to the piston, between when the first piston hole is starting to open and when the last piston hole is fully open is 4.5mm (i.e. 15 gaps X 0.2mm + 1 hole diameter (1.5mm) = 4.5mm). Thus, by arranging the holes in this manner it is possible to provide a dump valve which progressively opens. This is particularly beneficial, since it allows the operator to "inch forward" the vehicle in a controlled manner, thereby allowing for good control of the vehicle at very slow speeds.

As mentioned above, preferably, the holes are provided on a helix, though of course it is not necessary to provide the holes in this form in order to provide a first piston hole set wherein different holes are positioned at different longitudinal positions on the piston.

Typically the 16 hole arrangements mentioned above, might be used in conjunction with a distance x between abutment 84 and 86 of 7mm. This allows for manufacturing tolerance errors, and an initial movement of the plunger (of say 2mm) between the rest position, and the first of the 16 holes starting to open.

As mentioned above, the spring force of the first spring 76, when compressed by distance x (200 newtons) is substantially equal to the spring force of spring 80 when in a rest condition (also 200 newtons). This provides for a good pedal feel and a substantially seamless transition from the dump valve being fully open to the start of the brakes being applied.

It will be appreciated that certain components of the CMDV act as a master cylinder, and certain other components of the CMDV act as a dump valve (shown generally by arrow 90). It will also be appreciated that the dump valve 90 and master cylinder act sequentially, i.e. the dump valve 90 opens following which the master cylinder acts to apply the brakes.

The applicant has therefore invented a new and patentable combined master cylinder and dump valve.

For the avoidance of doubt, the term "hole set" covers a set having any number of holes, including just a single hole.

Figure 2 shows various seals which are elastomeric in nature. Under certain circumstances, where a limited amount of seal leakage can be tolerated, certain seals can be defined by a simple piston land or a plunger land, in the absence of any elastomeric or other separate "sealing" component.

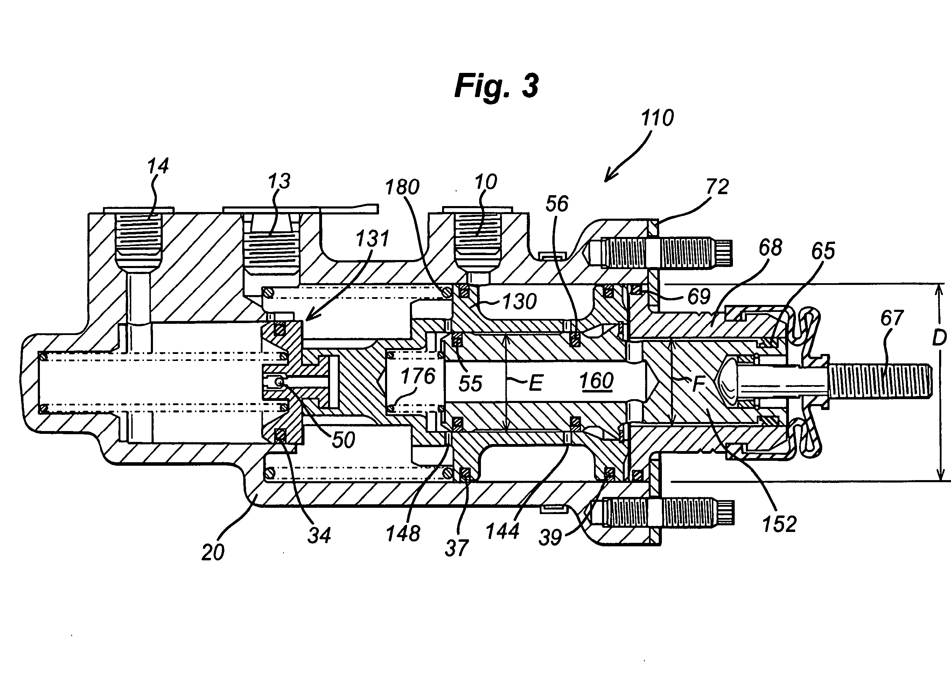

Furthermore, the applicant is the first to realise that it is possible to adapt a known combined master cylinder and booster to provide a CMDV. Thus, with reference to figure 3 there is shown a known combined master cylinder and booster 110 (known here as a CMB). Certain components of the CMB 110 are identical with the CMDV 11. In particular, body 20, master cylinder seal 34, check valve 50, first piston seal 37, second piston seal 39, third plunger seal 65, first plunger seal 55, second plunger seal 56, closing plate 72, closing spiggot 68, closing spiggot seal 69, and push rod 67.

It is pointed out that these components may look different, simply because figure 3 is an engineering manufacturing drawing and figure 2 is a schematic drawing. Figure 3 is a true representation of the components. By way of explanation figure 3 includes protective caps over the ports which are removed prior to fitting the valve.

### Operation of CMB 110 is known, but will now be briefly described:-

As an initial point, first piston hole set 144 of piston 130 includes a series of circumferentially spaced, radially orientated holes. However, all holes are located at the same axial position on the piston. Second piston hole set 148 also includes a series of circumferentially spaced radially orientated holes, again all located at the same longitudinal position on the piston. It can be seen that the first piston hole set is positioned just to the left of the second plunger seal 56, and the second piston hole set 148 is positioned just to the left of the first plunger seal 55.

As the push rod moves to the left by operation of a foot brake, initially the plunger moves to the left such that first and second plunger seals 55 and 56 initially close all of the holes of their corresponding piston hole sets 148 and 144. Continued movement of the push rod to the left then causes the plunger seals 55 and 56 to partially open all of the holes of their corresponding hole set. This allows pressurised fluid from pressure port 10 to enter the plunger bore 160 which causes the piston to move to the left resulting in plunger seals 55 and 56 closing all of their corresponding holes. This pressurised fluid then becomes trapped in plunger bore and acts on diameter F of the plunger to force the plunger to the right when viewing figure 3, and acts on diameter D of the piston to force the piston to the left when viewing figure 3. Since diameter D is larger than diameter F, the force applied to push rod 67 is "boosted" by the ratio of (D X D/F X F) and hence the force applied to the master cylinder piston portion 131 of piston 130 is greater than the force applied to the push rod 67.

Thus, to provide a boost ratio of 2-1, D needs to be 1.412 times larger than F. Boost ratios of 3-1, 4-1 and 5-1 can be provided by ensuring that D is 1.732, 2.000, 2.236 times larger than F respectively.

It will be appreciated, that under the circumstances both springs 176 and 180 have become partially compressed when then booster is operating to boost the push road load. This can be contrasted with a CMDV according to the present invention, wherein during progressive opening of the dump valve, spring 76 is compressed, whereas spring 80 remains in its initially installed condition.

A comparison of piston 30 and piston 130 shows relatively few differences. The main difference is the difference in position of the second piston hole sets 48 and 148. In particular the master cylinder piston portion 131 can be identical the corresponding portion of piston 30.

Furthermore, a comparison of plunger 52 and plunger 152 again shows there to be few differences, the main difference being in the alternative positioning of first plunger seal 55. In particular, second plunger seal 56 is located at the same position, and that part of plunger 152 to the left of second plunger seal 56 is identical to the corresponding part of plunger 52.

It can be seen therefore that the applicant has been able to adapt a device (the CMB) having one type of valve (a booster valve) to a completely different device (CMDV) having a completely different sort of valve (a dump valve) for use in a completely different application. This adaptation has been carried out using a considerable number of common components, thereby by virtue of the economies of scale, potentially providing for both a cheaper CMDV, and also a cheaper CMB.

It is here emphasised that there is no "boosting" aspect to the CMDV. The boost ratio of the CMB is dependent upon the relative diameters F and D. The applicant is the first to realise that it is possible to retain the same diameters D and F of a CMB, and apply them to a CMDV, even though the relative diameters play no part in the operation of the CMDV.

Typically the body 20 will be made from a casting. Where there are minor differences between the finally machined body of a CMDV and the finally machined body of a CMB (e.g. a different thread size on one or more of the ports), then it is possible to use the same bare body casting and machine it in a slightly different manner to provide for the slightly differing CMDV and CMB finally machined bodies. However, under other circumstances, it is possible to use the same bare casting, and machine it in an identical manner (for example body 20) to provide a body for both a CMDV and a CMB.

Similarly, it is possible to provide a common bare piston casting which is machined in a slightly different manner to provide a CMDV piston or a CMB piston.

Similarly, the plunger may be provided as a common bare casting and machined slightly differently to provide a CMDV plunger or a CMB plunger.

The applicant is the first to realise that it is possible to produce identical bare castings, and under certain circumstances machine the bare castings in an identical manner to provide for devices (a CMDV or a CMB) which have significantly different applications.

## Claims

1. A combined master cylinder and dump valve (11) including a body (20) having a body bore (22), a brake port (14), a tank port (13), and a pressure port (10) with each port being hydraulically connected with the body bore, a piston (30) slideable within the body bore and a plunger (52),
the piston delimiting a part of the body bore to define a master cylinder (24A) for pressurising the brake port, the piston further including a piston seal (37) for isolating the pressure port from the tank port, and including a piston bore (42), a first piston hole set (44) for hydraulically connecting the pressure port to the piston bore and a second piston hole set (48) for hydraulically connecting the piston bore to the tank port, the plunger being slideably received in the piston bore and having a plunger bore (60), a plunger hole set (58) for selectively connecting the first piston hole set with the plunger bore, a plunger seal arrangement (54) for selectively isolating the first piston hole set from the plunger bore,
the plunger bore being hydraulically connected to the piston bore, such that:-
in a rest condition the master cylinder is unpressurised and the seal arrangement (54) isolates the first piston hole set (44) from the plunger bore (60), thereby isolating the pressure port from the tank port (13), and
in an actuated condition, the plunger acts to slideably move the piston to pressurise the brake port (14), and the plunger hole set hydraulically (58) connects the first piston hole set (44) with the plunger bore (60), thereby hydraulically connecting the pressure port (10) to the tank port (13).

2. A combined master cylinder and dump valve as defined in claim 1 in which the body bore (22) includes a body main cylinder (26A) engaged by the piston seal (37), the body main cylinder having a diameter (D), and the plunger includes a seal (65) in slideable engagement with a spigot wall, the spigot wall being fixed relative to the body and having a diameter (F), in which the body main cylinder diameter (D) is larger than the spigot wall diameter (F), preferably the body main cylinder diameter (D) is at least 1.412 times larger than the spigot wall diameter (F), alternatively at least 1.732 times larger, alternatively at least 2.000 times larger, alternatively at least 2.236 times larger.

3. A combined master cylinder and dump valve as defined in claim 1 in which the body bore (22) includes a first cylindrical portion (24) having a first diameter (d) defining the master cylinder (24A), and a second cylindrical portion (26) having a second diameter (D) defining a body main cylinder (26A), in which the second diameter (D) is larger than the first diameter (d).

4. A combined master cylinder and dump valve as defined in any preceding claim in which the first hole set (44) is on the pressure port (10) side of the piston seal (37) and the second hole set (48) is on the tank port (13) side of the piston seal (37).

5. A combined master cylinder and dump valve as defined in any preceding claim in which one or more of the holes in the first piston hole set (44) and/or second piston hole set (48) and/or the plunger hole set (58) are radially orientated.

6. A combined master cylinder and dump valve as defined in any preceding claim in which the first piston hole set (44) includes at least two holes, preferably at least three holes, preferably at least three holes arranged in a helix, each hole being located at a different axial position such that movement of the plunger relative to the piston progressively hydraulically connects each hole of the first piston hole set (44) with the plunger bore (60).

7. A combined master cylinder and dump valve as defined in any preceding claim in which the plunger seal arrangement (54) include a first (55) and second (56) plunger seals in an axially spaced apart relationship.

8. A combined master cylinder and dump valve as defined in claim 7 in which the first plunger seal (55) isolates the first piston hole set (44) from the second piston hole set (48), and/or the second plunger seal (48) acts to selectively hydraulically connect the first piston hole set (44) with the plunger bore (60).

9. A combined master cylinder and dump valve as defined in any preceding claim in which a first resilient means (76), preferably a spring, operably acts between the piston (30) and plunger (52) to bias the plunger (52) to a rest condition.

10. A combined master cylinder and dump valve as defined in any preceding claim in which the plunger (52) is retained in the piston (30) by a retaining means (62), preferably a circlip (62).

11. A combined master cylinder and dump valve as defined in any preceding claim in which the plunger (52) includes a plunger abutment (84) and the piston (30) includes a piston abutment (86), in which in the rest condition the plunger abutment is spaced from the piston abutment by a distance (x) and in the actuated condition the plunger abutment abuts the piston abutment, thereby moving the piston to pressurise the brake port.

12. A combined master cylinder and dump valve as defined in any preceding claim in which a second resilient means (80), preferably a spring, operably acts between the piston (30) and body (20) to bias the piston (30) to a rest condition.

13. A combined master cylinder and dump valve as defined in claim 12 when dependent on claim 9 in which the first resilient means (76) provides a first bias force when the plunger abutment (84) is in contact with the piston abutment (86) and the second resilient means (80) provides a second bias force when the piston (30) is in the rest condition and the first bias force is substantially equal to or less than the second bias force so that substantially all the holes of the first piston hole set (44) are hydraulically connected to the plunger bore (60) prior to the brake port (14) being pressurised by the master cylinder (24A).

14. A combined master cylinder and dump valve as defined in claim 12 when dependent upon claim 9 in which with the combined master cylinder and dump valve in a rest position, an installed load of the first resilient means (76) is less than the installed load of the second resilient means (80).

15. A combined master cylinder and dump valve as defined in any preceding claim in which the master cylinder includes a recuperation hole (28) which vents to an internal tank of the body preferably provided by an annular region (46) in the body bore proximate the tank port.

16. A method of operating a combined master cylinder and dump valve including the steps of providing combined master cylinder and dump valve (11) including a body (20) having a body bore (22), a brake port (14), a tank port (13), and a pressure port (10) with each port being hydraulically connected with the body bore, a piston (30) slideable within the body bore and a plunger (52),
the piston delimiting a part of the body bore to define a master cylinder (24A) for pressurising the brake port, the piston further including a piston seal (37) for isolating the pressure port from the tank port, and including a piston bore (42), a first piston hole set (44) for hydraulically connecting the pressure port to the piston bore and a second piston hole set (48) for hydraulically connecting the piston bore to the tank port, the plunger being slideably received in the piston bore and having a plunger bore (60), a plunger hole set (58) for selectively connecting the first piston hole set with the plunger bore, a plunger seal arrangement (54) for selectively isolating the first piston hole set from the plunger bore,
the plunger bore being hydraulically connected to the piston bore,
placing the valve in a rest condition such that the master cylinder is unpressurised and the seal arrangement (54) isolates the first piston hole set (44) from the plunger bore (60), thereby isolating the pressure port from the tank port (13), and
placing the valve in an actuated condition, such that the plunger acts to slideably move the piston to pressurise the brake port (14), and the plunger hole set hydraulically (58) connects the first piston hole set (44) with the plunger bore (60), thereby hydraulically connecting the pressure port (10) to the tank port (13).

17. The method of claim 16 in which the first piston hole set (44) includes at least two holes, preferably at least three holes, preferably at least three holes arranged in a helix, each hole being located at a different axial position such that movement of the plunger relative to the piston progressively hydraulically connects each hole of the first piston hole set (44) with the plunger bore (60).

18. A method as defined in claim 16 or 17 including the step of providing a first resilient means (76), preferably a spring that operably acts between the piston (30) and plunger (52) to bias the plunger (52) to the rest condition.

19. The method as defined in claim 16 or 17. or 18 in which the plunger (52) includes a plunger abutment (84) and the piston (30) includes a piston abutment (86), in which in the rest condition the plunger abutment is spaced from the piston abutment by a distance (x) and in the actuated condition the plunger abutment abuts the piston abutment, thereby moving the piston to pressurise the brake port.

20. A method as defined in any one of claims 16 to 19 including the step of providing a second resilient means (80), preferably a spring, that operably acts between the piston (30) and body (20) to bias the piston (30) to the rest condition.

## Patentansprüche

1. Kombination (11) aus Hauptzylinder und Ablassventil mit einem Körper (20) mit einer Körperbohrung (22), einem Bremsenanschluss (14), einem Tankanschluss (13) und einem Druckanschluss (10), wobei jeder Anschluss mit der Körperbohrung hydraulisch verbunden ist, einem in der Körperbohrung verschieblichen Kolben (30) und einem Stößel (52),
wobei der Kolben einen Teil der Körperbohrung begrenzt, um einen Hauptzylinder (24A) zu definieren, der den Bremsenanschluss mit Druck beaufschlagt, wobei der Kolben ferner eine Kolbendichtung (37) zum Isolieren des Druckanschlusses von dem Tankanschluss aufweist sowie eine Kolbenbohrung (42), einen ersten Kolbenöffnungssatz (44) zum hydraulischen Verbinden des Druckanschlusses mit der Kolbenbohrung und einen zweiten Kolbenöffnungssatz (48) zum hydraulischen Verbinden der Kolbenbohrung mit dem Tankanschluss, wobei der Stößel verschieblich in der Kolbenbohrung aufgenommen ist und eine Stößelbohrung (60), einen Stößelöffnungssatz (58) zum wahlweisen Verbinden des ersten Kolbenöffnungssatzes mit der Stößelbohrung und eine Stößeldichtungsanordnung (54) zum wahlweisen Isolieren des ersten Kolbenöffnungssatzes von der Stößelbohrung aufweist,
wobei die Stößelbohrung mit der Kolbenbohrung hydraulisch verbunden ist, so dass:
der Hauptzylinder in einem Ruhezustand drucklos ist und die Dichtungsanordnung (54) den ersten Kolbenöffnungssatz (44) von der Stößelbohrung (60) isoliert, wodurch der Druckanschluss von dem Tankanschluss (13) isoliert wird, und
der Stößel in einem betätigten Zustand den Kolben verschieblich bewegt, um den Bremsenanschluss (14) mit Druck zu beaufschlagen, und der Stößelöffnungssatz (58) den ersten Kolbenöffnungssatz (44) mit der Stößelbohrung (60) hydraulisch verbindet, wodurch der Druckanschluss (10) mit dem Tankanschluss (13) hydraulisch verbunden wird.

2. Kombination aus Hauptzylinder und Ablassventil nach Anspruch 1, bei der die Körperbohrung (22) einen Körperhauptzylinder (26A) aufweist, an dem die Kolbendichtung (37) angreift, wobei der Körperhauptzylinder einen Durchmesser (D) hat, und der Stößel eine Dichtung (65) aufweist, die mit einer Stutzenwand verschieblich in Eingriff steht, wobei die Stutzenwand relativ zu dem Körper fixiert ist und einen Durchmesser (F) hat, wobei der Durchmesser (D) des Körperhauptzylinders größer ist als der Durchmesser (F) der Stutzenwand, vorzugsweise ist der Durchmesser (D) des Körperhauptzylinders mindestens um das 1,412-Fache größer als der Durchmesser (F) der Stutzenwand, alternativ mindestens um das 1,732-Fache größer, alternativ mindestens um das 2,000-Fache größer, alternativ mindestens um das 2,236-Fache größer.

3. Kombination aus Hauptzylinder und Ablassventil nach Anspruch 1, bei der die Körperbohrung (22) einen ersten zylindrischen Abschnitt (24) mit einem ersten Durchmesser (d) aufweist, der den Hauptzylinder (24A) definiert, und einen zweiten zylindrischen Abschnitt (26) mit einem zweiten Durchmesser (D), der einen Körperhauptzylinder (26A) definiert, wobei der zweite Durchmesser (D) größer ist als der erste Durchmesser (d).

4. Kombination aus Hauptzylinder und Ablassventil nach einem der vorhergehenden Ansprüche, bei der sich der erste Öffnungssatz (44) auf der bei dem Druckanschluss (10) liegenden Seite der Kolbendichtung (37) befindet und der zweite Öffnungssatz (48) sich auf der bei dem Tankanschluss (13) liegenden Seite der Kolbendichtung (37) befindet.

5. Kombination aus Hauptzylinder und Ablassventil nach einem der vorhergehenden Ansprüche, bei der eine oder mehrere der Öffnungen in dem ersten Kolbenöffnungssatz (44) und/oder zweiten Kolbenöffnungssatz (48) und/oder Stößelöffnungssatz (58) radial ausgerichtet sind.

6. Kombination aus Hauptzylinder und Ablassventil nach einem der vorhergehenden Ansprüche, bei der der erste Kolbenöffnungssatz (44) mindestens zwei Öffnungen aufweist, vorzugsweise mindestens drei Öffnungen, vorzugsweise mindestens drei spiralförmig angeordnete Öffnungen, wobei jede Öffnung in einer anderen axialen Lage angeordnet ist, so dass die Bewegung des Stößels relativ zu dem Kolben jede Öffnung des ersten Kolbenöffnungssatzes (44) fortschreitend hydraulisch mit der Stößelbohrung (60) verbindet.

7. Kombination aus Hauptzylinder und Ablassventil nach einem der vorhergehenden Ansprüche, bei der die Stößeldichtungsanordnung (54) eine erste und eine zweite Stößeldichtung (55, 56) aufweist, die axial voneinander beabstandet sind.

8. Kombination aus Hauptzylinder und Ablassventil nach Anspruch 7, bei der die erste Stößeldichtung (55) den ersten Kolbenöffnungssatz (44) von dem zweiten Kolbenöffnungssatz (48) isoliert und/oder die zweite Stößeldichtung (48) wahlweise den ersten Kolbenöffnungssatz (44) mit der Stößelbohrung (60) hydraulisch verbindet.

9. Kombination aus Hauptzylinder und Ablassventil nach einem der vorhergehenden Ansprüche, bei der ein erstes elastisches Mittel (76), vorzugsweise eine Feder, funktionsmäßig zwischen dem Kolben (30) und dem Stößel (52) wirkt, um den Stößel (52) in einen Ruhezustand vorzuspannen.

10. Kombination aus Hauptzylinder und Ablassventil nach einem der vorhergehenden Ansprüche, bei der der Stößel (52) durch ein Haltemittel (62), vorzugsweise einen Sicherungsring (62), in dem Kolben (30) festgehalten wird.

11. Kombination aus Hauptzylinder und Ablassventil nach einem der vorhergehenden Ansprüche, bei der der Stößel (52) einen Stößelanschlag (84) aufweist und der Kolben (30) einen Kolbenanschlag (86) aufweist, wobei der Stößelanschlag im Ruhezustand um eine Strecke (x) von dem Kolbenanschlag beabstandet ist und der Stößelanschlag im betätigten Zustand an dem Kolbenanschlag anschlägt, wodurch der Kolben bewegt wird, um den Bremsenanschluss mit Druck zu beaufschlagen.

12. Kombination aus Hauptzylinder und Ablassventil nach einem der vorhergehenden Ansprüche, bei der ein zweites elastisches Mittel (80), vorzugsweise eine Feder, funktionsmäßig zwischen dem Kolben (30) und dem Körper (20) wirkt, um den Kolben (30) in einen Ruhezustand vorzuspannen.

13. Kombination aus Hauptzylinder und Ablassventil nach Anspruch 12, wenn dieser von Anspruch 9 abhängt, bei der das erste elastische Mittel (76) eine erste Vorspannkraft bereitstellt, wenn der Stößelanschlag (84) mit dem Kolbenanschlag (86) in Kontakt steht, und das zweite elastische Mittel (80) eine zweite Vorspannkraft bereitstellt, wenn sich der Kolben (30) im Ruhezustand befindet und die erste Vorspannkraft im Wesentlichen gleich oder kleiner ist als die zweite Vorspannkraft, so dass im Wesentlichen alle Öffnungen des ersten Kolbenöffnungssatzes (44) mit der Stößelbohrung (60) hydraulisch verbunden sind, bevor der Bremsenanschluss (14) durch den Hauptzylinder (24A) mit Druck beaufschlagt wird.

14. Kombination aus Hauptzylinder und Ablassventil nach Anspruch 12, wenn dieser von Anspruch 9 abhängt; bei der dann, wenn sich die Kombination aus Hauptzylinder und Ablassventil in einer Ruhestellung befindet, eine installierte Kraft des ersten elastischen Mittels (76) kleiner ist als die installierte Kraft des zweiten elastischen Mittels (80).

15. Kombination aus Hauptzylinder und Ablassventil nach einem der vorhergehenden Ansprüche, bei der der Hauptzylinder eine Rückgewinnungsöffnung (28) aufweist, die in einen inneren Behälter des Körpers mündet, der vorzugsweise durch einen ringförmigen Bereich (46) in der Körperbohrung in der Nähe des Tankanschlusses bereitgestellt wird.

16. Verfahren zur Betätigung einer Kombination aus Hauptzylinder und Ablassventil mit den folgenden Schritten: Bereitstellen einer Kombination (11) aus Hauptzylinder und Ablassventil mit einem Körper (20) mit einer Körperbohrung (22), einem Bremsenanschluss (14), einem Tankanschluss (13) und einem Druckanschluss (10), wobei jeder Anschluss mit der Körperbohrung hydraulisch verbunden ist, einem in der Körperbohrung verschieblichen Kolben (30) und einem Stößel (52),
wobei der Kolben einen Teil der Körperbohrung begrenzt, um einen Hauptzylinder (24A) zu definieren, der den Bremsenanschluss mit Druck beaufschlagt, wobei der Kolben ferner eine Kolbendichtung (37) zum Isolieren des Druckanschlusses von dem Tankanschluss sowie eine Kolbenbohrung (42), einen ersten Kolbenöffnungssatz (44) zum hydraulischen Verbinden des Druckanschlusses mit der Kolbenbohrung und einen zweiten Kolbenöffnungssatz (48) zum hydraulischen Verbinden der Kolbenbohrung mit dem Tankanschluss aufweist, wobei der Stößel verschieblich in der Kolbenbohrung aufgenommen ist und eine Stößelbohrung (60), einen Stößelöffnungssatz (58) zum wahlweisen Verbinden des ersten Kolbenöffnungssatzes mit der Stößelbohrung und eine Stößeldichtungsanordnung (54) zum wahlweisen Isolieren des ersten Kolbenöffnungssatzes von der Stößelbohrung aufweist,
wobei die Stößelbohrung mit der Kolbenbohrung hydraulisch verbunden ist,
das Ventil in einen Ruhezustand versetzen, so dass der Hauptzylinder drucklos ist und die Dichtungsanordnung (54) den ersten Kolbenöffnungssatz (44) von der Kolbenbohrung (60) isoliert, wodurch der Druckanschluss von dem Tankanschluss (13) isoliert wird, und
das Ventil in einen betätigten Zustand versetzen, so dass der Stößel den Kolben verschieblich bewegt, um den Bremsenanschluss (14) mit Druck zu beaufschlagen, und der Stößelöffnungssatz (58) den ersten Kolbenöffnungssatz (44) mit der Stößelbohrung (60) hydraulisch verbindet, wodurch der Druckanschluss (10) mit dem Tankanschluss (13) hydraulisch verbunden wird.

17. Verfahren nach Anspruch 16, bei dem der erste Kolbenöffnungssatz (44) mindestens zwei Öffnungen umfasst, vorzugsweise mindestens drei Öffnungen, vorzugsweise mindestens drei spiralförmig angeordnete Öffnungen, wobei jede Öffnung in einer anderen axialen Lage angeordnet ist, so dass die Bewegung des Stößels relativ zu dem Kolben jede Öffnung des ersten Kolbenöffnungssatzes (44) fortschreitend hydraulisch mit der Stößelbohrung (60) verbindet.

18. Verfahren nach Anspruch 16 oder 17 mit dem Schritt des Bereitstellens eines ersten elastischen Mittels (76), vorzugsweise einer Feder, die funktionsmäßig zwischen dem Kolben (30) und dem Stößel (52) wirkt, um den Stößel (52) in den Ruhezustand vorzuspannen.

19. Verfahren nach Anspruch 16 oder 17 oder 18, bei dem der Stößel (52) einen Stößelanschlag (84) aufweist und der Kolben (30) einen Kolbenanschlag (86) aufweist, wobei der Stößelanschlag im Ruhezustand um eine Strecke (x) von dem Kolbenanschlag beabstandet ist und der Stößelanschlag im betätigten Zustand an dem Kolbenanschlag anschlägt, wodurch der Kolben bewegt wird, um den Bremsenanschluss mit Druck zu beaufschlagen.

20. Verfahren nach einem der Ansprüche 16 bis 19 mit dem Schritt des Bereitstellens eines zweiten elastischen Mittels (80), vorzugsweise einer Feder, die funktionsmäßig zwischen dem Kolben (30) und dem Körper (20) wirkt, um den Kolben (30) in den Ruhezustand vorzuspannen.

## Revendications

1. Maître-cylindre et valve de décharge combiné (11) comprenant un corps (20) ayant un alésage de corps (22), un orifice de frein (14), un orifice de réservoir (13), et un orifice de pression (10), chaque orifice étant hydrauliquement raccordé à l'alésage de corps, un piston (30) coulissant dans l'alésage de corps et un plongeur (52),
le piston délimitant une partie de l'alésage de corps pour définir un maître-cylindre (24A) pour mettre sous pression l'orifice de frein, le piston comprenant en outre un joint de piston (37) pour isoler l'orifice de pression de l'orifice de réservoir, et comprenant un alésage de piston (42), un premier ensemble de trous de piston (44) pour raccorder hydrauliquement l'orifice de pression à l'alésage de piston et un second ensemble de trous de piston (48) pour raccorder hydrauliquement l'alésage de piston à l'orifice de réservoir, le plongeur étant reçu de manière coulissante dans l'alésage de piston et ayant un alésage de plongeur (60), un ensemble de trous de plongeur (58) pour raccorder sélectivement le premier ensemble de trous de piston à l'alésage de plongeur, un agencement de joint de plongeur (54) pour isoler sélectivement le premier ensemble de trous de piston de l'alésage de plongeur,
l'alésage de plongeur étant hydrauliquement raccordé à l'alésage de piston, de sorte que :
dans une condition de repos le maître-cylindre est dépressurisé et l'agencement de joint (54) isole le premier ensemble de trous de piston (44) de l'alésage de plongeur (60), de manière à isoler l'orifice de pression de l'orifice de réservoir (13), et
dans une condition actionnée, le plongeur agit de manière à déplacer de manière coulissante le piston pour mettre sous pression l'orifice de frein (14), et l'ensemble de trous de plongeur (58) raccorde hydrauliquement le premier ensemble de trous de piston (44) à l'alésage de plongeur (60), de manière à raccorder hydrauliquement l'orifice de pression (10) à l'orifice de réservoir (13).

2. Maître-cylindre et valve de décharge combiné comme défini dans la revendication 1 dans lequel l'alésage de corps (22) comprend un cylindre principal de corps (26A) mis en prise par le joint de piston (37), le cylindre principal de corps ayant un diamètre (D), et le plongeur comprend un joint (65) en prise coulissante avec une paroi à ergot, la paroi à ergot étant fixe par rapport au corps et ayant un diamètre (F), dans lequel le diamètre du cylindre principal de corps (D) est supérieur au diamètre de la paroi à ergot (F), de préférence le diamètre de cylindre principal de corps (D) est au moins 1,412 fois plus élevé que le diamètre de la paroi à ergot (F), en variante au moins 1,732 fois plus élevé, en variante au moins 2,000 fois plus élevé, en variante au moins 2,236 fois plus élevé.

3. Maître-cylindre et valve de décharge combiné comme défini dans la revendication 1 dans lequel l'alésage de corps (22) comprend une première partie cylindrique (24) ayant un premier diamètre (d) définissant le maître-cylindre (24A), et une seconde partie cylindrique (26) ayant un second diamètre (D) définissant un cylindre principal de corps (26A), dans lequel le second diamètre (D) est supérieur au premier diamètre (d).

4. Maître-cylindre et valve de décharge combiné comme défini dans l'une quelconque des revendications précédentes dans lequel le premier ensemble de trous (44) est sur le côté de l'orifice de pression (10) du joint de piston (37) et le second ensemble de trous (48) est sur le côté de l'orifice (13) de réservoir du joint de piston (37).

5. Maître-cylindre et valve de décharge combiné comme défini dans l'une quelconque des revendications précédentes dans lequel un ou plusieurs des trous dans le premier ensemble de trous de piston (44) et/ou second ensemble de trous de piston (48) et/ou l'ensemble de trous de plongeur (58) sont orientés radialement.

6. Maître-cylindre et valve de décharge combiné comme défini dans l'une quelconque des revendications précédentes dans lequel le premier ensemble de trous de piston (44) comprend au moins deux trous, de préférence au moins trois trous, de préférence au moins trois trous agencés dans une hélice, chaque trou étant situé à une position axiale différente de sorte que le déplacement du plongeur par rapport au piston raccorde hydrauliquement progressivement chaque trou du premier ensemble de trous de piston (44) à l'alésage de plongeur (60).

7. Maître-cylindre et valve de décharge combiné comme défini dans l'une quelconque des revendications précédentes dans lequel l'agencement de joint de plongeur (54) comprend des premier (55) et second (56) joints de plongeur dans une relation axialement espacés.

8. Maître-cylindre et valve de décharge combiné comme défini dans la revendication 7 dans lequel le premier joint de plongeur (55) isole le premier ensemble de trous de piston (44) du second ensemble de trous de piston (48), et/ou le deuxième joint de plongeur (48) agit de manière à raccorder hydrauliquement sélectivement le premier ensemble de trous de piston (44) à l'alésage de plongeur (60).

9. Maître-cylindre et valve de décharge combiné comme défini dans l'une quelconque des revendications précédentes dans lequel des premiers moyens élastiques (76), de préférence un ressort, agissent fonctionnellement entre le piston (30) et le plongeur (52) pour solliciter le plongeur (52) vers une condition de repos.

10. Maître-cylindre et valve de décharge combiné comme défini dans l'une quelconque des revendications précédentes dans lequel le plongeur (52) est retenu dans le piston (30) par des moyens de retenue (62), de préférence un anneau élastique (62).

11. Maître-cylindre et valve de décharge combiné comme défini dans l'une quelconque des revendications précédentes dans lequel le plongeur (52) comprend une butée de plongeur (84) et le piston (30) comprend une butée de piston (86), dans lequel dans la condition de repos la butée de plongeur est espacée de la butée de piston par une distance (x) et dans la condition actionnée la butée de plongeur est en butée avec la butée de piston, de manière à déplacer le piston pour mettre sous pression l'orifice de frein.

12. Maître-cylindre et valve de décharge combiné comme défini dans l'une quelconque des revendications précédentes dans lequel des seconds moyens élastiques (80), de préférence un ressort, agissent fonctionnellement entre le piston (30) et le corps (20) pour solliciter le piston (30) vers une condition de repos.

13. Maître-cylindre et valve de décharge combiné comme défini dans la revendication 12 lorsqu'elle est dépendante de la revendication 9 dans lequel les premiers moyens élastiques (76) produisent une première force de sollicitation lorsque la butée de plongeur (84) est en contact avec la butée de piston (86) et les seconds moyens élastiques (80) produisent une seconde force de sollicitation lorsque le piston (30) est dans la condition de repos et la première force de sollicitation est sensiblement égale ou inférieure à la seconde force de sollicitation de sorte que sensiblement tous les trous du premier ensemble de trous de piston (44) sont hydrauliquement raccordés à l'alésage de plongeur (60) avant que l'orifice de frein (14) soit mis sous pression par le maître-cylindre (24A).

14. Maître-cylindre et valve de décharge combiné comme défini dans la revendication 12 lorsqu'elle est dépendante de la revendication 9 dans lequel, les maître-cylindre et valve de décharge combiné étant dans une position de repos, une charge installée des premiers moyens élastiques (76) est inférieure à la charge installée des seconds moyens élastiques (80).

15. Maître-cylindre et valve de décharge combiné comme défini dans l'une quelconque des revendications précédentes dans lequel le maître-cylindre comprend un trou de récupération (28) qui ventile un réservoir interne du corps de préférence formé par une région annulaire (46) dans l'alésage de corps à proximité de l'orifice de réservoir.

16. Procédé de fonctionnement de maître-cylindre et valve de décharge combiné comprenant les étapes consistant à fournir un maître-cylindre et valve de décharge combiné (11) comprenant un corps (20) ayant un alésage de corps (22), un orifice de frein (14), un orifice de réservoir (13), et un orifice de pression (10), chaque orifice étant hydrauliquement raccordé à l'alésage de corps, un piston (30) coulissant dans l'alésage de corps et un plongeur (52),
le piston délimitant une partie de l'alésage de corps pour définir un maître-cylindre (24A) pour mettre sous pression l'orifice de frein, le piston comprenant en outre un joint de piston (37) pour isoler l'orifice de pression de l'orifice de réservoir, et comprenant un alésage de piston (42), un premier ensemble de trous de piston (44) pour raccorder hydrauliquement l'orifice de pression à l'alésage de piston et un second ensemble de trous de piston (48) pour raccorder hydrauliquement l'alésage de piston à l'orifice de réservoir, le plongeur étant reçu de manière coulissante dans l'alésage de piston et ayant un alésage de plongeur (60), un ensemble de trous de plongeur (58) pour raccorder sélectivement le premier ensemble de trous de piston à l'alésage de plongeur, un agencement de joint de plongeur (54) pour isoler sélectivement le premier ensemble de trous de piston de l'alésage de plongeur,
l'alésage de plongeur étant hydrauliquement raccordé à l'alésage de piston,
placer la valve dans une condition de repos de sorte que le cylindre-maître soit dépressurisé et l'agencement de joint (54) isole le premier ensemble de trous de piston (44) de l'alésage de plongeur (60), de manière à isoler l'orifice de pression de l'orifice de réservoir (13), et
placer la valve dans une condition actionnée, de sorte que le plongeur agisse de manière à déplacer de manière coulissante le piston pour mettre sous pression l'orifice de frein (14), et l'ensemble de trous de plongeur (58) raccorde hydrauliquement le premier ensemble de trous de piston (44) à l'alésage de plongeur (60), de manière à raccorder hydrauliquement l'orifice de pression (10) à l'orifice de réservoir (13).

17. Procédé de la revendication 16 dans lequel le premier ensemble de trous de piston (44) comprend au moins deux trous, de préférence au moins trois trous, de préférence au moins trois trous agencés en hélice, chaque trou étant situé à une position axiale différente de sorte que le mouvement du plongeur par rapport au piston raccorde hydrauliquement progressivement chaque trou du premier ensemble de trous de piston (44) à l'alésage de plongeur (60).

18. Procédé comme défini dans la revendication 16 ou 17 comprenant l'étape consistant à fournir des premiers moyens élastiques (76), de préférence un ressort qui agissent fonctionnellement entre le piston (30) et le plongeur (52) pour solliciter le plongeur (52) vers la condition de repos.

19. Procédé comme défini dans la revendication 16, 17 ou 18 dans lequel le plongeur (52) comprend une butée de plongeur (84) et le piston (30) comprend une butée de piston (86), dans lequel dans la condition de repos la butée de plongeur est espacée de la butée de piston par une distance (x) et dans la condition actionnée la butée de plongeur est en butée avec la butée de piston, de manière à déplacer le piston pour mettre sous pression l'orifice de frein.

20. Procédé comme défini dans l'une quelconque des revendications 16 à 19 comprenant l'étape consistant à fournir des seconds moyens élastiques (80), de préférence un ressort, qui agissent fonctionnellement entre le piston (30) et le corps (20) pour solliciter le piston (30) vers la condition de repos.
